# EUROPEAN PATENT SPECIFICATION

(11) **EP 3 376 718 B1**
(45) Date of publication and mention of the grant of the patent: **17.11.2021**
(21) Application number: 17161393.8
(22) Date of filing: 16.03.2017
(51) Int. Cl.: H04L 12/801, H04L 12/851, H04L 29/08, H04L 12/823, H04W 4/00

(54) **QUALITY OF SERVICE IN COMMUNICATION NETWORK BASED ON USER EMOTION STATE**
DIENSTGÜTE IN EINEM KOMMUNIKATIONSNETZWERK BASIEREND AUF DEM GEFÜHLSZUSTAND DES BENUTZERS
QUALITÉ DE SERVICE DANS UN RÉSEAU DE COMMUNICATION BASÉE SUR L'ÉTAT ÉMOTIONNEL DE L'UTILISATEUR

(43) Date of publication of application: 19.09.2018
(73) Proprietor: Nokia Technologies Oy, 02610 Espoo (FI)
(72) Inventor: Madhusudana, Chaluvarasanakopple Kumar, 560045 Bangalore (IN); Prakash, Devegowda, 560045 Bangalore (IN)
(74) Representative: Novagraaf Technologies

(56) References cited:
- WO-A1-2016/186543
- MANOJ B S ET AL: "Sentient Networks: A New Dimension in Network Capability", ADVANCED INFORMATION NETWORKING AND APPLICATIONS WORKSHOPS, 2007, AINAW '07. 21ST INTERNATIONAL CONFERENCE ON, IEEE, PISCATAWAY, NJ, USA, 21 May 2007 (2007-05-21), pages 6-11, XP031334489, ISBN: 978-0-7695-2847-2
- ADIBI SASAN: "Biomedical Sensing Analyzer (BSA) for Mobile-Health (mHealth)-LTE", IEEE JOURNAL OF BIOMEDICAL AND HEALTH INFORMATICS, IEEE, PISCATAWAY, NJ, USA, vol. 18, no. 1, 1 January 2014 (2014-01-01), pages 345-351, XP011536288, ISSN: 2168-2194, DOI: 10.1109/JBHI.2013.2262076 [retrieved on 2013-12-31]
- VIET HOANG ANH ET AL: "A real-time model based Support Vector Machine for emotion recognition through EEG", CONTROL, AUTOMATION AND INFORMATION SCIENCES (ICCAIS), 2012 INTERNATIONAL CONFERENCE ON, IEEE, 26 November 2012 (2012-11-26), pages 191-196, XP032335061, DOI: 10.1109/ICCAIS.2012.6466585 ISBN: 978-1-4673-0812-0

## Description

### FIELD OF THE INVENTION

The present invention relates to a method, a communication device and a computer readable medium for setting quality of service in a communication network based on user emotion state.

### BACKGROUND

On the one hand, human emotional values are very important and crucial. Most of the time, for example while making an emergency call, network elements will not understand the emotion of the caller and will not apply adequate priority, based on emotion of the caller.

On the other hand, there exist user applications that are based on quality of service in communication network that contains objective metrics such as bit rate, latency, and bit error rate, which are collected from different network layers during a session of the network communication.

Thus, there is a need for prioritizing the quality of service for a session in a communication based on emotion of a user related to the session.

Document by MANOJ BS et al, entitled "Sentient Networks: A New Dimension in Network Capability", ADVANCED INFORMATION NETWORKING AND APPLICATIONS WORKSHOPS, 2007, AINAW '07, 21 ST INTERNATIONAL CONFERENCE ON, IEEE, PISCATAWAY, NJ, USA, 21 May 2007, pages 6-11, discloses classifying data type such as voice, video and date and using emotion content of the voice packets transmitted through a network to classify these packets with the objective to provide better QoS scheme for panicked callers.

Document by ADIBI SASAN entitled "Biomedical Sensing Analyzer (BSA) for Mobile-Health (mHealth)-LTE", IEEE JOURNAL OF BIOMEDICAL AND HEALTH INFORMATICS, IEEE, PISCATAWAY, NJ, USA, vol. 18, no. 1, 1 January 2014, pages 345-351, discloses a biomedical analyser configured to formulate QoS measurements for end-to-end communication based on pilot signals and delay analysis.

Document by VIET HOANG ANH et al, entitled "A real-time model based Support Vector Machine for emotion recognition through EEG", CONTROL, AUTOMATION AND INFORMATION SCIENCES (ICCAIS), 2012 INTERNATIONAL CONFERENCE ON, IEEE, 26 November 2012, pages 191-196, discloses a method for emotion recognition based on electroencephalography.

### SUMMARY

This summary is provided to introduce concepts related to the present inventive subject matter. This summary is not intended to identify essential features of the claimed subject matter nor is it intended for use in determining or limiting the scope of the claimed subject matter.

The invention is defined by the appended claims.

Advantageously, based on the human emotion, the operator can deliver better user experience. The emotion captured from human body is used as a key parameter to set the required priority for communication need and to dynamically adopt the adequate quality of service for the communication.

In an embodiment, said quality of service data are provided by the application or determined in view of the settings or requirements of the application for operating the service associated with the application.

In an embodiment, said class of traffic is associated with a drop probability of low, medium or high.

In an embodiment, the differentiated services code point value is contained in a field of the header of the IP packet.

In an embodiment, said data received from a set of physiological detection sensor contain user emotion values, and for determining the user emotion state, an integer value is determined from the received data as a user emotion index that is mapped to a user emotion state according to a predefined table.

In an embodiment, the communication device receives downlink traffic from the application server using the same quality of service as sent the uplink traffic.

The present invention and the benefits thereof shall be better understood upon examining the description below, which makes reference to the attached figures, in which:
- FIG. 1 is a schematic block diagram of a communication system according to one embodiment of the invention for setting quality of service of a communication based on user emotion state; and
- FIG. 2 is a schematic diagram showing a classification of user emotion states; and
- FIG. 3 is an algorithm of a method for setting quality of service of a communication based on user emotion state according to one embodiment of the invention.

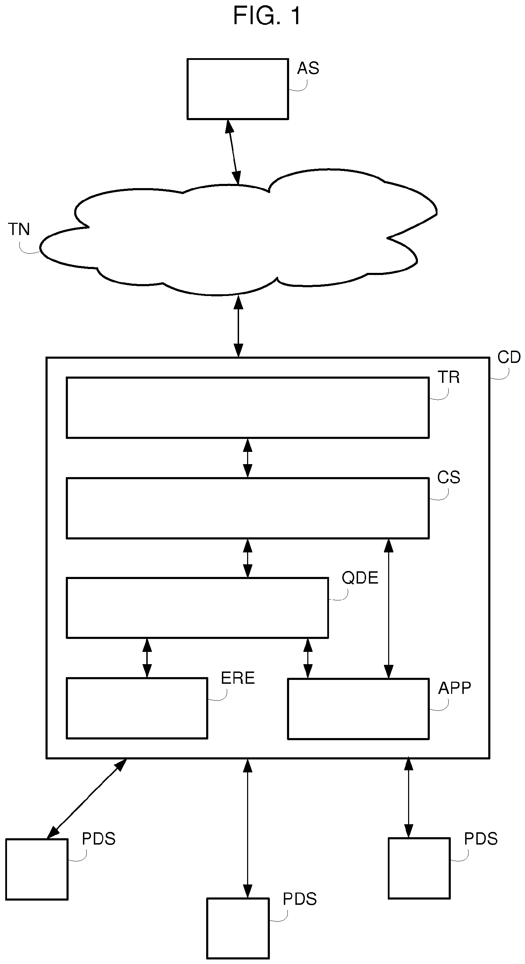

Referring to FIG. 1, a communication system comprises an application server AS and a communication device CD, able to communicate between them at least a telecommunication network TN.

The telecommunication network TN may be a wired or wireless network, or a combination of wired and wireless networks. The telecommunication network TN can be associated with a packet network, for example, an IP ("Internet Protocol") high-speed network such as the Internet or an intranet, or even a company-specific private network.

For example, the telecommunication network TN is a digital cellular radio communication network of the GSM (Global System for Mobile communications) or UMTS (Universal Mobile Telecommunications System) or even CDMA (Code Division Multiple Access) type or even LTE (Long Term Evolution) type. The GSM type network may be coupled with a GPRS (General Packet Radio Service) network for the transmission of data by packets with mobility and access management via radio.

In another example, the telecommunication network TN is a public wireless network of limited scope, such as WLAN (Wireless Local Area Network) or conforming to a standard 802.1x, or medium range according to the protocol WiMAX (World Wide Interoperability Microwave Access).

Additionally, the telecommunication network TN may be operating in accordance with fourth or fifth generation wireless communication protocols and/or the like as well as similar wireless communication protocols that may be developed in the future.

Throughout the disclosure, the term "quality of service", or "QoS," may broadly refer to the quality of a network communication in terms of metrics such as bandwidth, signal-to-noise ratios, bit error rate, latency, packet losses, or other measurements collected from various network segments (e.g., access, metro, or core segments).

Since modern telecommunication networks carry many different types of services, including voice, video, streaming music, web pages and email, they have to implement QoS mechanisms that allow these services to co-exist, such mechanism being based on differentiated services.

Differentiated services designate a computer networking architecture that specifies a scalable and coarse-grained mechanism for classifying and managing network traffic and providing quality of service on IP communication networks. It relies on a mechanism to classify and mark packets as belonging to a specific class; then routers in the network implement the packet-forwarding properties associated with a class of traffic.

Differentiated services operate on the principle of traffic classification, where each data packet is placed into a limited number of traffic classes, rather than differentiating network traffic based on the requirements of an individual flow. Each router on the network is configured to differentiate traffic based on its class. Each traffic class can be managed differently, ensuring preferential treatment for higher-priority traffic on the network.

The communication device CD may be embodied as either a fixed device or a mobile device such as a desktop computer, laptop computer, mobile terminal, mobile computer, mobile phone, mobile communication device, game device, digital camera/camcorder, audio/video player, television device, radio receiver, digital video recorder, positioning device, a chipset, a computing device comprising a chipset, any combination thereof, and/or the like.

The communication device CD comprises a transceiver TR, an emotion recognition engine ERE, an application APP, a QoS determination engine QDE and communication subsystem CS. The communication device CD incorporates or is directly linked to a set of physiological detection sensor PDS.

The transceiver TR is adapted to send and receive signaling information in accordance with an interface standard of an applicable cellular system, and/or any number of different wireline or wireless networking techniques.

The communication subsystem CS is used by the application APP to set a required QoS for the service associated with the application based on input provided by the QoS determination engine QDE.

The emotion recognition engine ERE receives data from the set of physiological detection sensor PDS, these data containing user emotion values. From these values, the emotion recognition engine ERE determines an integer value as an user emotion index that can be mapped to a user emotion state according to a predefined table, like Table 1 which shows an illustrative example of user emotion states that will be explained hereinafter.

**Table 1**

| User emotion state | User emotion index |
|---|---|
| Excited | 0 |
| Clated | 1 |
| Serene | 2 |
| Calm | 3 |
| Fatigued | 4 |
| Depressed | 5 |
| Stressed | 6 |
| Tense | 7 |
| Upset | 8 |

The QoS determination engine QDE collects integer value as user emotion index provided by the emotion recognition engine ERE and eventually QoS values provided by the application APP. Based on these values, the QoS determination engine QDE determine a final QoS value that will be used for uplink traffic. If the application is configured with a specific QoS, the values corresponding to this specific QoS are taken into account for determining the final QoS value.

According to the service associated with the application, the QoS determination engine QDE can give more weightage to the input provided by the application or to the input provided by the emotion recognition engine ERE.

More generally, the QoS determination Engine QDE uses the inputs received from emotion recognition engine ERE, the QoS values provided by the application APP if any and predefined policies to determine the final QoS value that will be used for communication. The predefined policies are configurable by the user. Some of the possible policies that can be used are listed below:
- Prefer QoS provided by the emotion recognition engine ERE over QoS provided by the application APP;
- Prefer QoS provided by the application APP over QoS provided by emotion recognition engine ERE.
- Use the best QoS value after comparing the QoS provided by the emotion recognition engine ERE and the application APP;
- From 08:00 AM to 08:00 PM prefer the QoS value provided by the emotion recognition engine ERE;
- Prefer the QoS provided by the application APP over QoS provided by emotion recognition engine ERE when the application APP is included in a predefined list of applications (e.g. YouTube, Facebook...);
- On public holidays prefer QoS provided by the application APP.

The physiological detection sensor PDS can use different mechanisms to capture data in order identify the emotion state of a user, for example based on heartbeat, skin conductance and breathing level measurement. The physiological detection sensor PDS can also be at least in part implemented in wearables devices connected to the communication device CD.

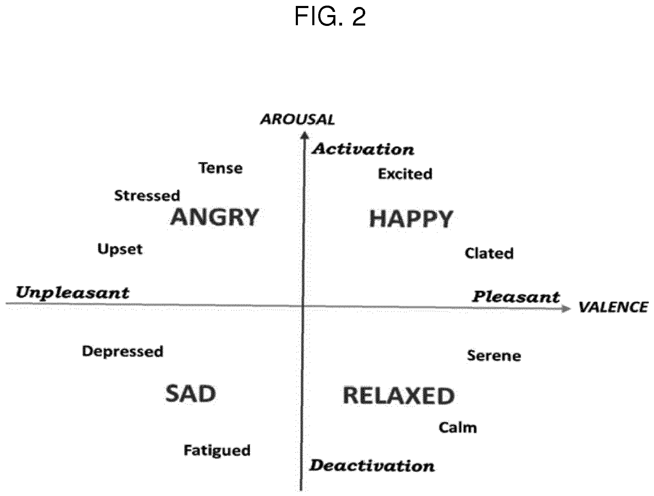

With reference to FIG. 2, the basic human emotions can be divided into nine different feeling states that each denote an essential mental state. More especially, the nine user emotion states designated as upset, stressed, tense, excited, clated, serene, calm, fatigued and depressed are classified in the four categories of mental states designated as angry, happy, sad and relaxed.

Arousal is widely considered one of the two main dimensions of an emotional response; the other, valence, represents the positive or negative quality of the response (so that winning an award is high arousal, positive valence whereas listening to a boring speech is low arousal, negative valence). Measuring arousal is therefore not the same as measuring emotion, but does capture an important component of it. Arousal has been found to be a strong predictor of attention and memory. Arousal level tends be low when a person is sleeping, and high in activated states such as rage or mental workload. Engaging in a task that imposes mental workload, such as solving math problems (even if not particularly difficult), will tend to cause for example skin conductivity to increase sharply and then gradually decline.

Thus, the user emotion states can be classified also according to the activation or deactivation of the arousal, the states calm and serene, fatigued and depressed, soliciting lower arousal whereas the states clated and excited, upset, stressed and tense, solicit higher arousal. In parallel, the user emotion states can be classified according to their valence, taking into account their pleasant degree or unpleasant degree: fatigued, depressed, upset, stressed and tense are considered unpleasant emotion states whereas calm, serene, clated and excited are considered as pleasant emotion states.

Here are described as example various mechanisms to deduce emotional states from different types of physiological detection sensor SDP : a) Increased grip pressure—where such indication can increase the probability of choosing angry; or b) Decreased grip pressure—where such indication can increase the probability of choosing happy or sad emotion; or c) Increased heart rate—where such indication can increase the probability of choosing angry; or d) Decreased heart rate—where such indication can increase the probability of choosing happy or sad emotion; or e) Increased Arousal (skin conductivity)-wherein such indication can increase the probability of choosing a high state of emotion such as angry; or f) Decreased Arousal—where such indication can increase the probability of choosing sad state g) A Breath Content Level or a Breath Rate—wherein such indication can determine a possible medically impaired state of the caller resulting for example from a high alcohol intake or a low blood sugar level in a diabetic patient in serious distress or an Asthmatic condition.

Referring back to FIG. 1, the QoS determination engine QDE determine a final QoS value that will be used for uplink traffic toward an application server AS that delivers a service associated with the application.

As corresponding downlink traffic originates from the application server that is the entity which will stamp the IP packets with the final QoS values for the downlink IP packets, the QoS determination engine QDE has to convey the application server to use the determined final QoS value.

In a first embodiment, the application server AS uses the final QoS value for the downlink traffic which was received in the uplink traffic. In this first embodiment, the application server is configured by the operator to use the same QoS values for the downlink traffic which was received in the uplink traffic. Since uplink and downlink traffic will have an identical QoS values, downlink and uplink traffic will receive the same QoS treatment by the network elements (routers/switches) guaranteeing the optimal user experience.

In a second embodiment which is not covered by the scope of the independent claims, the communication device CD conveys an information on the final QoS value that needs to be used by the application server in downlink direction during a connection establishment phase. The information on the final QoS value is conveyed to the application server as application data using HTTP or similar protocol (according to implementation). For example, the payload of a HTTP message sent to the application server indicates the activation of emotion based QoS and the value of differentiated services code point (DSCP) as final QoS value.

The QoS determination engine QDE defines an emotion table for the application APP, providing a mapping of the user emotion states to available DSCP values along with corresponding drop probability. The emotion table is defined as function of requirements inherent to the application. Table 2 shows that kind of mapping as illustrative example.

**Table 2**

| DSCP value | | Meaning | Drop probability | User emotion state |
|---|---|---|---|---|
| 101 | 110 | EF | N/A | Happy(Excited) |
| 000 | 000 | BE | N/A | Relaxed(Calm) |
| 001 | 010 | AF11 | Low | Relaxed(Serene) |
| 001 | 100 | AF12 | Medium | Sad(Fatigued) |
| 001 | 110 | AF13 | High | Angry(Upset) |
| 010 | 010 | AF21 | Low | Sad(Depressed) |
| 010 | 100 | AF22 | Medium | Angry(Stressed) |
| 010 | 110 | AF23 | High | Happy(Clated) |
| 011 | 010 | AF31 | Low | Angry(Tense) |
| 011 | 100 | AF32 | Medium | Happy(Excited) |
| 011 | 110 | AF33 | High | Relaxed(Calm) |
| 100 | 010 | AF31 | Low | Relaxed(Serene) |
| 100 | 100 | AF32 | Medium | Sad(Fatigued) |
| 100 | 110 | AF33 | High | Angry(Upset) |

From the example of Table 2, each one of the nine user emotion states corresponds to a unique drop probability low, medium or high (for example emotion state "upset" corresponds to high drop probability) associated with a code of Assured Forwarding (AF) that gives assurance of delivery under prescribed conditions. The two emotion states "excited" and "calm" correspond respectively to medium and high drop probability under: Assured Forwarding behavior AF32 and AF33 and are also respectively associated to DSCP values having meaning of Expedited Forwarding (EF) and Best Effort (EF). Conventionally, EF traffic is often given strict priority queuing above all other traffic classes, because an overload of EF traffic may cause queuing delays and affect the jitter and delay tolerances within the class. Also, BE traffic corresponds to a default forwarding behavior with unspecified variable bit rate and delivery time, depending on the current traffic load.

The DSCP values and corresponding drop probability are mentioned in RFC 4594. The emotion table introduced a new column mapping user emotion states with DSCP values.

The QoS determination engine QDE selects a DSCP value as final QoS value taking into the emotion index (corresponding user emotion state) provided by the emotion recognition engine ERE and eventually QoS values provided by the application APP.

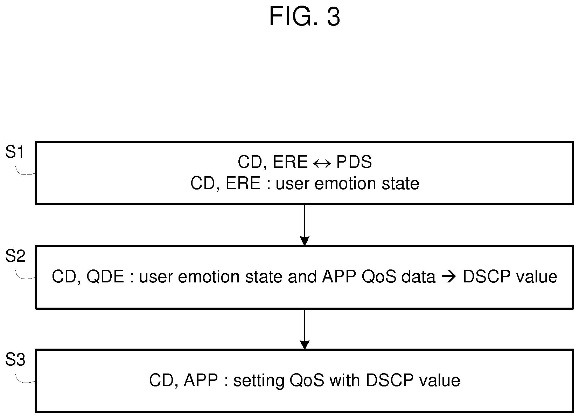

With reference to FIG. 3, a method for setting quality of service of a communication based on user emotion state according to one embodiment of the invention comprises steps S1 to S3 executed by the communication device.

In step S1, a user launches from the communication device CD an application APP that initiates a session with a server AS that delivers a service associated with the application.

The emotion recognition engine ERE receives data from a set of physiological detection sensor PDS that is incorporated or is directly linked to the communication device CD, these data containing user emotion values. From these values, the emotion recognition engine ERE determines a user emotion state. More especially, the emotion recognition engine ERE determines an integer value from the received data as a user emotion index that is mapped to a user emotion state according to a predefined table.

In step S2, the QoS determination engine QDE retrieves the determined emotion state and QoS data related to the application APP. These QoS data are provided by the application APP or determined in view of the settings or requirements of the application for operating the service associated with the application.

The QoS determination engine QDE determine a final QoS value that will be used for uplink traffic toward the application server AS that delivers the service associated with the application. The final QoS value corresponds to a DSCP value that is determined from the retrieved emotion state, QoS values related to the application APP, and predefined policies indicating how and which of the data related to the user emotion state and the QoS data related to the application APP are to be chosen.

In step S3, the application APP sets a quality of service for the service associated with the application based on the DSCP value, by putting this DSCP value into an IP packet to mark it according to the class of traffic it belongs in.

It is assumed that each router on the telecommunication network is configured to differentiate traffic based on its class. For example, these routers implement per-hop behaviors, which define the packet-forwarding properties associated with a class of traffic. For example, the per-hop behavior is determined by a field of the header of the IP packet, this field containing the final QoS value.

In a first illustrative example, a football/sports fan will be very excited to check the current score of an ongoing match. He is using a web browser installed in the smartphone. Previous communication subsystem will treat the HTTP browsing traffic generated by the browser as normal priority traffic, without considering emotion of the user. Any delay and packet drop in the network will impact the user experience (User experience is a function of human emotion). With the communication device according to the invention, traffic in the above context would be handled as high priority traffic considering emotional state of the user, the delay/drops will be minimized, enhancing the user experience.

In a second illustrative example, it is considered bio medical Sensors (wearables) are going to be integral part of the human life in coming years. Wearables will be sending the data to a centralized server at a given interval. IP traffic generated by these wearables will have a QoS value set to meet the service requirements of the use case. Here QoS of the traffic can be altered depending on the human emotion/ human condition. If a sensor recognizes medical danger, traffic generated in that context will have a QoS set to highest priority.

In a third illustrative example, a user is viewing the streaming of conference in a smart phone, and its attention span is limited. At the starting of the conference, the user is excited and QoS would be set for high for the traffic generated in this context. For example after 20 mins, the user lost interest and user emotion is detected as relaxed. The QoS is then set to low, to let other high priority traffic get better treatment in the network. When user refocuses on conference and is again excited, the QoS is set for high for the traffic generated. Thus, the network resources would be optimally used without compromising with the user experience.

The invention described here relates to a method and a device for setting quality of service of a communication based on user emotion state. According to one implementation of the invention, the steps of the invention are determined by the instructions of a computer program incorporated into the device. The program comprises program instructions which, when said program is loaded and executed within the server, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for setting quality of service of a communication between an application (APP) implemented in a communication device (CD) and an application server (AS), the method comprising the following steps in the communication device (CD):
determining (S1) a user emotion state from data received from a set of physiological detection sensors (PDS) that is incorporated or is directly linked to the communication device (CD);
determining (S2) a differentiated services code point, DSCP, value by selecting the DSCP value in a predefined table mapping differentiated services code point values with user emotion states, taking into account the determined user emotion state and quality of service data related to the application (APP), wherein the determining is performed taking into account predefined policies indicating whether to give more weightage to the user emotion state or the quality of service data related to the application,
setting (S3) a quality of service for the service associated with the application based on the DSCP value, by putting the DSCP value into an IP packet to mark the IP packet according to a class of traffic, wherein the quality of service for the service associated with the application is set for uplink traffic from the communication device (CD) to the application server (AS) for enabling the application server to use the DSCP value to stamp the downlink IP packets from the application server to the communication device (CD) with the DSCP value.

2. A method according to claim 1, wherein said quality of service data are provided by the application (APP) or determined in view of the settings or requirements of the application for operating the service associated with the application.

3. A method according to claim 1 or 2, wherein said class of traffic is associated with a drop probability of low, medium or high.

4. A method according to any of the claims 1 to 3, wherein the differentiated services code point value is contained in a field of the header of the IP packet.

5. A method according to any of the claims 1 to 4, wherein said data received from a set of physiological detection sensor (PDS) contain user emotion values, and for determining the user emotion state, an integer value is determined from the received data as a user emotion index that is mapped to a user emotion state according to a predefined table.

6. A method according to claim 1, wherein the method further comprises receiving downlink traffic from the application server using the same QoS as sent in the uplink traffic.

7. A communication device (CD) for setting quality of service of a communication between an application (APP) implemented in the communication device (CD) and an application server (AS), comprising:
means (ERE) for determining a user emotion state from data received from a set of physiological detection sensors (PDS) that is incorporated or is directly linked to the communication device (CD),
means (QDE) for determining a differentiated services code point, DSCP, value by selecting the DSCP value in a predefined table mapping differentiated services code point values with user emotion states, taking into account the determined user emotion state and quality of service data related to the application (APP), wherein determining the DSCP value is performed taking into account predefined policies indicating whether to give more weightage to the user emotion state or the quality of service data related to the application,
means (APP) for setting a quality of service for the service associated with the application based on the DSCP value, by putting the differentiated services code point value into an IP packet to mark the IP packet according to a class of traffic, wherein the quality of service for the service associated with the application is set for uplink traffic from the communication device (CD) to the application server (AS) for enabling the application server to use the DSCP value to stamp the downlink IP packets from the application server to the communication device (CD) with the DSCP value.

8. A computer-readable medium having embodied thereon a computer program for executing, when run on a processor, a method for setting quality of service of a communication between an application (APP) implemented in a communication device (CD) and an application server (AS) according to any of claims 1 to 6.

## Patentansprüche

1. Verfahren zum Einstellen der Dienstgüte einer Kommunikation zwischen einer in einer Kommunikationsvorrichtung (CD) implementierten Anwendung (APP) und einem Anwendungsserver (AS), wobei das Verfahren die folgenden Schritte in der Kommunikationsvorrichtung (CD) umfasst:
Bestimmen (S1) eines Gefühlszustands des Benutzers aus Daten, die von einem Satz physiologischer Erfassungssensoren (PDS) empfangen werden, der in die Kommunikationsvorrichtung (CD) integriert oder direkt mit ihr verbunden ist;
Bestimmen (S2) eines differenzierten Dienstcodepunkt-Wertes (Differentiated Services Code Point, DSCP) durch Auswählen des DSCP-Wertes in einer vordefinierten Tabelle, die differenzierte Dienstcodepunkt-Werte auf Benutzer-Gefühlszustände abbildet, unter Berücksichtigung des bestimmten Benutzer-Gefühlszustands und der Dienstgütedaten, die sich auf die Anwendung (APP) beziehen, wobei das Bestimmen unter Berücksichtigung vordefinierter Richtlinien durchgeführt wird, die angeben, ob dem Benutzer-Gefühlszustand oder den Dienstgütedaten, die sich auf die Anwendung beziehen, mehr Gewicht gegeben werden soll,
Einstellen (S3) einer Dienstgüte für den zu der Anwendung gehörigen Dienst auf der Grundlage des DSCP-Wertes, indem der DSCP-Wert in ein IP-Paket eingefügt wird, um das IP-Paket gemäß einer Verkehrsklasse zu markieren, wobei die Dienstgüte für den zu der Anwendung gehörigen Dienst für den Uplink-Verkehr von der Kommunikationsvorrichtung (CD) zum Anwendungsserver (AS) eingestellt wird, um es dem Anwendungsserver zu ermöglichen, den DSCP-Wert zu verwenden, um die Downlink-IP-Pakete von dem Anwendungsserver zu der Kommunikationsvorrichtung (CD) mit dem DSCP-Wert zu stempeln.

2. Verfahren nach Anspruch 1, wobei die Dienstgütedaten von der Anwendung (APP) bereitgestellt werden oder im Hinblick auf die Einstellungen oder Anforderungen der Anwendung für den Betrieb des zu der Anwendung gehörigen Dienstes bestimmt werden.

3. Verfahren nach Anspruch 1 oder 2, wobei die Verkehrsklasse einer geringen, mittleren oder hohen Verlustwahrscheinlichkeit zugehörig ist.

4. Verfahren nach einem der Ansprüche 1 bis 3, wobei der differenzierte Dienstcodepunkt-Wert in einem Feld des Headers des IP-Pakets enthalten ist.

5. Verfahren nach einem der Ansprüche 1 bis 4, wobei die von einem Satz physiologischer Erfassungssensoren (PDS) empfangenen Daten Benutzer-Gefühlswerte enthalten und zur Bestimmung des Benutzer-Gefühlszustands ein ganzzahliger Wert aus den empfangenen Daten als ein Benutzer-Gefühlsindex bestimmt wird, der gemäß einer vordefinierten Tabelle auf einen Benutzer-Gefühlszustand abgebildet wird.

6. Verfahren nach Anspruch 1, wobei das Verfahren ferner das Empfangen von Downlink-Verkehr vom Anwendungsserver unter Verwendung der gleichen QoS, wie sie im Uplink-Verkehr gesendet wird, umfasst.

7. Kommunikationsvorrichtung (CD) zum Einstellen der Dienstgüte einer Kommunikation zwischen einer in der Kommunikationsvorrichtung (CD) implementierten Anwendung (APP) und einem Anwendungsserver (AS), umfassend:
Mittel (ERE) zum Bestimmen eines Gefühlszustands des Benutzers aus Daten, die von einem Satz physiologischer Erfassungssensoren (PDS) empfangen werden, der in die Kommunikationsvorrichtung (CD) integriert oder direkt mit ihr verbunden ist,
Mittel (QDE) zum Bestimmen eines differenzierten Dienstcodepunkt-Wertes (Differentiated Services Code Point, DSCP) durch Auswählen des DSCP-Wertes in einer vordefinierten Tabelle, die differenzierte Dienstcodepunkt-Werte auf Benutzer-Gefühlszustände abbildet, unter Berücksichtigung des bestimmten Benutzer-Gefühlszustands und der Dienstgütedaten, die sich auf die Anwendung (APP) beziehen, wobei das Bestimmen des DSCP-Wertes unter Berücksichtigung vordefinierter Richtlinien durchgeführt wird, die angeben, ob dem Benutzer-Gefühlszustand oder den Dienstgütedaten, die sich auf die Anwendung beziehen, mehr Gewicht gegeben werden soll,
Mittel (APP) zum Einstellen einer Dienstgüte für den zu der Anwendung gehörigen Dienst auf der Grundlage des DSCP-Wertes, indem der DSCP-Wert in ein IP-Paket eingefügt wird, um das IP-Paket gemäß einer Verkehrsklasse zu markieren, wobei die Dienstgüte für den zu der Anwendung gehörigen Dienst für den Uplink-Verkehr von der Kommunikationsvorrichtung (CD) zum Anwendungsserver (AS) eingestellt wird, um es dem Anwendungsserver zu ermöglichen, den DSCP-Wert zu verwenden, um die Downlink-IP-Pakete von dem Anwendungsserver zu der Kommunikationsvorrichtung (CD) mit dem DSCP-Wert zu stempeln.

8. Computerlesbares Medium mit einem darauf verkörperten Computerprogramm zum Ausführen, wenn es auf einem Prozessor ausgeführt wird, eines Verfahrens zum Einstellen der Dienstgüte einer Kommunikation zwischen einer Anwendung (APP), die in einer Kommunikationsvorrichtung (CD) implementiert ist, und einem Anwendungsserver (AS) nach einem der Ansprüche 1 bis 6.

## Revendications

1. Procédé destiné à régler une qualité de service d'une communication entre une application (APP) mise en œuvre dans un dispositif de communication (CD) et un serveur d'application (AS), le procédé comprenant les étapes suivantes dans le dispositif de communication (CD) :
la détermination (S1) d'un état d'émotion d'utilisateur à partir d'une donnée reçue depuis un ensemble de capteurs de détection physiologique (PDS) qui est incorporé ou est directement relié au dispositif de communication (CD) ;
la détermination (S2) d'une valeur de point de code de services différenciés, DSCP, en sélectionnant la valeur DSCP dans une table prédéfinie qui met en correspondance des valeurs de point de code de services différenciés avec des états d'émotion d'utilisateur, en prenant en compte l'état d'émotion d'utilisateur déterminé et la donnée de qualité de service relative à l'application (APP), dans lequel la détermination est réalisée en prenant en compte des politiques prédéfinies qui indiquent s'il s'agit de donner plus de pondération à l'état d'émotion d'utilisateur ou à la donnée de qualité de service relative à l'application,
le réglage (S3) d'une qualité de service pour le service associé à l'application sur la base de la valeur DSCP, en mettant la valeur DSCP dans un paquet IP pour marquer le paquet IP en fonction d'une classe de trafic, dans lequel la qualité de service pour le service associé à l'application est réglée pour un trafic de liaison montante depuis le dispositif de communication (CD) vers le serveur d'application (AS) afin de permettre au serveur d'application d'utiliser la valeur DSCP en vue d'estampiller les paquets IP de liaison descendante depuis le serveur d'application vers le dispositif de communication (CD) avec la valeur DSCP.

2. Procédé selon la revendication 1, dans lequel lesdites données de qualité de service sont fournies par l'application (APP) ou déterminées au vu des réglages ou des exigences de l'application pour exploiter le service associé à l'application.

3. Procédé selon la revendication 1 ou 2, dans lequel ladite classe de trafic est associée à une probabilité d'abandon faible, moyenne ou élevée.

4. Procédé selon l'une quelconque des revendications 1 à 3, dans lequel la valeur de point de code de services différenciés est contenue dans un champ de la tête du paquet IP.

5. Procédé selon l'une quelconque des revendications 1 à 4, dans lequel lesdites données reçues depuis un ensemble de capteurs de détection physiologique (PDS) contiennent des valeurs d'émotion d'utilisateur, et pour la détermination de l'état d'émotion d'utilisateur, une valeur entière est déterminée à partir de la donnée reçue en tant qu'indice d'émotion d'utilisateur qui est mis en correspondance avec un état d'émotion d'utilisateur en fonction d'une table prédéfinie.

6. Procédé selon la revendication 1, dans lequel le procédé comprend en outre la réception d'un trafic de liaison descendante depuis le serveur d'application à l'aide du même QoS que celui envoyé dans le trafic de liaison montante.

7. Dispositif de communication (CD) destiné à régler une qualité de service d'une communication entre une application (APP) mise en œuvre dans un dispositif de communication (CD) et un serveur d'application (AS), qui comprend :
un moyen (ERE) pour déterminer un état d'émotion d'utilisateur à partir d'une donnée reçue depuis un ensemble de capteurs de détection physiologique (PDS) qui est incorporé ou est directement relié au dispositif de communication (CD) ;
un moyen (QDE) pour déterminer une valeur de point de code de services différenciés, DSCP, en sélectionnant la valeur DSCP dans une table prédéfinie qui met en correspondance des valeurs de point de code de services différenciés avec des états d'émotion d'utilisateur, en prenant en compte l'état d'émotion d'utilisateur déterminé et la donnée de qualité de service relative à l'application (APP), dans lequel le fait de déterminer la valeur DSCP est réalisé en prenant en compte des politiques prédéfinies qui indiquent s'il s'agit de donner plus de pondération à l'état d'émotion d'utilisateur ou à la donnée de qualité de service relative à l'application,
un moyen (APP) pour régler une qualité de service pour le service associé à l'application sur la base de la valeur DSCP, en mettant la valeur de point de code de services différenciés dans un paquet IP pour marquer le paquet IP en fonction d'une classe de trafic, dans lequel la qualité de service pour le service associé à l'application est réglée pour un trafic de liaison montante depuis le dispositif de communication (CD) vers le serveur d'application (AS) afin de permettre au serveur d'application d'utiliser la valeur DSCP en vue d'estampiller les paquets IP de liaison descendante depuis le serveur d'application vers le dispositif de communication (CD) avec la valeur DSCP.

8. Support lisible par ordinateur qui présente incorporé sur celui-ci un programme informatique pour exécuter, lorsqu'il est lancé sur un processeur, un procédé destiné à régler une qualité de service d'une communication entre une application (APP) mise en œuvre dans un dispositif de communication (CD) et un serveur d'application (AS) selon l'une quelconque des revendications 1 à 6.
